# EUROPEAN PATENT APPLICATION

(11) **EP 2 749 875 A1**
(43) Date of publication of application: **02.07.2014**
(21) Application number: 12199847.0
(22) Date of filing: 31.12.2012
(51) Int. Cl.: G01N 25/72

(54) **Method and Apparatus for Non-Destructive Thermographic Testing of Objects Using a Linear Laser Beam**

(71) Applicant: Flying Fish Stasz Kielkowski s.j., 31-864 Cracow (PL)
(72) Inventor: Michalski, Rafa, 31-462 Cracow (PL); Michalski, Rafa, 31-462 Cracow (PL)
(74) Representative: Fiolka, Janusz

(57) **Abstract**

The subject of the invention relates to a method for optical forming of a linear laser beam and a method of non destructive testing of the internal structure of objects, made of composite materials in particular, by using linear bands of energy generated with a linear laser beam. The subject of the invention also provides the apparatus for the application of these methods.

## Description

### 1. A Field of the Invention

The invention relates to a new method for forming an optical beam, and a new method for non-destructive testing of internal structure of objects made of composite material in particular, and an optical device for beam formation, and device for non-destructive testing of internal structure of objects.

### 2. Description of the technology condition

Methods and techniques of non-destructive tests are used to detect the discontinuities in materials and the evaluation of the properties of materials without causing changes in their functional properties. They are used in industry due to the need for high-quality semi-finished products, end products, devices and construction, as well as in diagnosis. The technical objects of non- destructive research are the different types of joints and connections and objects made of composite materials, as well as various types of coatings and covers of metallic, non-metallic or composite materials.

Infrared thermography is an area of the technique dedicated to the detection, recording, processing and visualization of invisible infrared radiation emitted by the object. As a result we get a picture (thermal), which is mapping the distribution of temperature on the surface of the examined object.

The Infrared Thermography system is known from the description of the US5386117 patent. In this system the mobile unit includes a thermal camera, a computer for data acquisition and processing and touch screen allowing for the control of the device and presentation of the thermograms. This device allows for the study of objects in the passive procedures involving the observation of half temperatures generated in the process of its functioning.

From the description of the US7605924 B2 patent, the solution of the internal control system of the structure of the material is known. The system combines ultrasonic and thermographic system of the control allowing to obtain 3D projections of the structure of the material. The generated laser beam focused or distributed to a small extend , scans the area of the examined object. The device for temperature recording is on the same side of the object as the enforcement. In this solution the authors have noticed that the use of the laser beam gives a beneficial effects , but the reserved solution relies on the scanning of the surface with a typical laser beam having a typical radial cross-section.

The use of infrared laser for the non-destructive material testing is also known from the offer of the Automation Technology company. The presented solution offers thermographic research of the object with the Lock-in and Thermography Pulse methods. These methods of active thermography rely on heat supplied to the material by means of focused infrared laser beam in the form of one or more pulses that scan the examined surface. Between the pulses the infrared camera reads thermograms and by analyzing the images of spreading of the temperature fields it is possible to determine the structure, finding the inhomogeneities or defects of the material.

The method and apparatus for thermographic nondestructive evaluation of an object are known from the description of the US7549789 patent. The description of the patent discloses a method and system for determining the thermal diffusivity and correctness. The invention described in this patent includes a variety of ways and a variety of heat sources, such as flashlights, projectors. In addition, through the use of screens, you can configure a source to obtain the required shape, such as the finite width of the belt. The inventors have turned their attention to the beneficial effects associated with the deposition of the heat in the process, but the process of getting "thermal belt" did not include the techniques in the field of laser physics.

From the description of the patent US7044634 B2 Thermography method is known. It relates to a way and apparatus to determine the position and location of the disturbances in the tested object by a termovisual camera determining the difference of the temperature above a certain threshold value. Excitation in this solution is the focused laser beam with the elements directing the head of the beam on the object surface at a speed in the range of 1-10000mm / s In this embodiment, the inventors have noted the beneficial effects of the laser beam, but reserved the solution of a laser beam of a typical circular cross-section scanned on the surface.

The above described solutions are based on a wide range of solutions connected with thermography and its use for non-destructive testing of materials. The presented enforcements in these inventions include, among others, lasers with focused beams.

### 3. SUMMARY OF THE INVENTION

The subject of the invention is a new method for forming an optical beam, and a new method for non-destructive testing of internal structure of objects, from composite materials in particular and devices adapted for use with these methods.

The use of a linear beam provides new observational opportunities because of the heat wave generations of well-defined geometry.

More specifically, the subject of the invention is to form a beam of the laser as a linear beam and the application of the linear laser beam to non-destructive testing of internal structure of objects, which provides new opportunities for observation because of the heat wave generation of well-defined geometry. The invention also provides a device for a shaped laser beam as the beam line and a device for non-destructive testing of internal structure of objects by means of a linear laser beam.

The invention is particularly suitable for use in the analysis of the internal structure of the composites and other objects of the directional anisotropy of the thermal properties.

In particular, the invention provides a new method and apparatus for non-destructive testing of internal structure and thickness of the material, which is classified as a new method of active thermography. The device consists of a thermal imaging camera operating in the infrared used to record changes in temperature on the surface of the test material, the laser, preferably a laser of an average power (1-100W) at a wavelength of 600nm-3000nm range. Laser cooperates with an adequate unique optics, preferably a spherical optics, and more preferably cylindrical optics, or multi cylindrical. Laser with the optics shape the energy beam, which is forcing the infrared thermal imaging (infrared thermography, or thermography IR).

The control unit manages the process of generating energy bars on the surface of the analyzed sample, thermal image acquisition and their processing.

The invention that is the subject of the application is employed to all metallic and non-metallic materials, also where the anisotropy of thermal properties is not only in the direction of plunge, but also in the level of thermal excitation. This means that the ability to detect cracks in the fiber material consisting of a matrix and the fiber elements, in particular for laminates on the basis of glass fiber and / or carbon fiber and / or aramid fiber and / or metallic fibers.

The method of the invention is particularly suitable for the study of composite materials, because even if the defect has a size much smaller than the pixel of the collecting thermal infrared camera due to the boundaries of the thermal excitation wave which has both a component in the direction of plunge as well as in a direction parallel to the forcing belt. The broken fiber, for example in the composite material of the sample during the research using the method described, results in the observational effect of a disproportionately larger size than the size of a crack due to the fact that they constitute the lines of thermal conductivity with different characteristics than the material of the matrix. This phenomenon is used in the present invention.

For visualization or treatment known algorithms can be used, such as:
1. Elementary analysis which relies on a combination of elements of thermograms taken at a different time, but with a delay relative to the same force ( being at a different place).
2. Fourier analysis based on the fast fourier transform = fft transformation carried out for each point of the thermogram separately.
3. Wavelet analysis based on a wavelet transform carried for each point of the thermogram separately.
4. Exploratory analysis of discontinuity and anisotropy based on predefined filters, such as Sobel filter.

The essence of the invention is the use of the linear laser beam which is moved parallel y in a perpendicular direction to the generated belt or belts, optically formed using the adequate optics, preferably aspheric optics, and more preferably cylindrical or multi cylindrical optics.

Locationally controlled, linear beam generated by the laser heats the object in a narrow lane in a place defined by the algorithm, and the camera also subordinated to the algorithm, records the data in a cyclic mode synchronized with the time and location of the forcing band, or forcing bands. Then, the system performs automatic grouping of the gathered thermograms paying a special attention to the time and locational and making transformative it allows to specify phase , amplitude or selectively modified image and, as a consequence , giving information about disorders of the heat wave propagation inside the examined sample both in the pit, which is the direction normal to the surface and the direction belonging to the plane parallel to the surface. After scanning the whole defined area and meeting the defined set of thermograms, the control unit manages the visualization process of the internal structure of the area on the basis of a selected predefined way.

The method being the subject of the invention belongs to the group called active thermal imaging, so it is a method of using an additional source of heat stimulus of an object. Furthermore, it is classified as an active reflective thermal imaging, which means that the forcing device is situated the same side as the device to record temperature changes.

It is possible to apply the method according to the invention in a system called active thermal transmission, which takes advantage of an additional source of thermal stimulation of the object located on the opposite side of the sample in relation to a device for recording the changes in temperature (infrared thermal camera).

In this device the beam emitted from the laser passes through an aspherical optical system, preferably of a cylindrical or multi cylindrical symmetry, generating energy bands at the surface of the examined object, moved paralelly through the complex of drive and synchronization of the location and account of laser module (3) in a direction perpendicular to the generated belt or belts, and thermograms obtained are collected by the DAQ unit (5) and are then analyzed, preferably using the visualization unit and the user's interface (6).

This solution provides a display of sharp thermal belts in every distance from the examined object, which completely solves the defect of the iris-based solutions, namely, diffraction and interference, and the necessity of setting the "focus" of the optical projection system.

Automation of the device , by analyzing information from the complex of sensors measuring the distance allows for the selection of laser time constants and, therefore, of the power deposited in the belt unit, depending on the actual distance from the tested surface. This allows the control over the actual capacity of the distribution as a function of the size of the field test of the device.

After scanning the whole defined area from the selected distance, it is possible to watch the interesting areas of higher magnification - that is, of a higher real resolution.

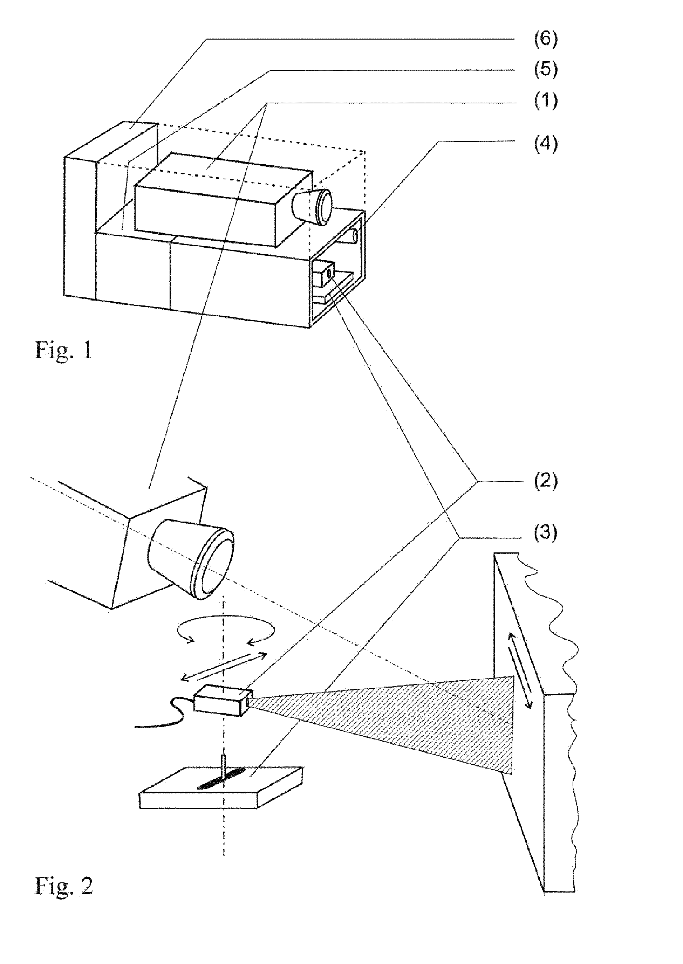

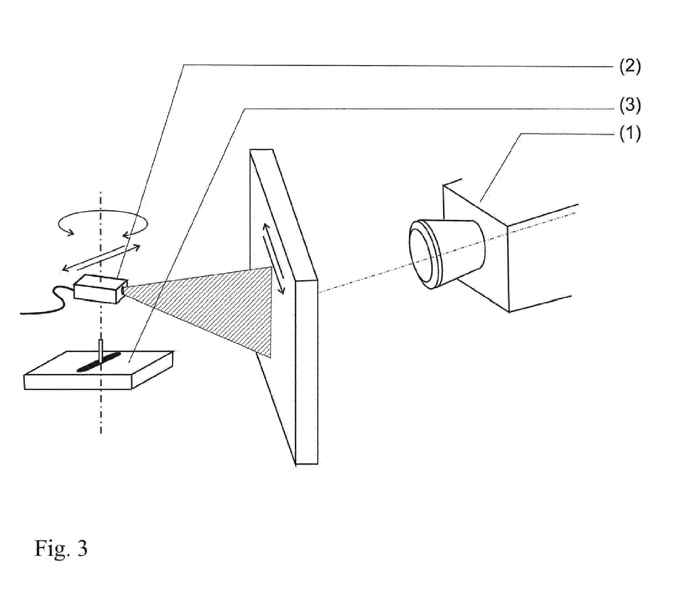

## Claims

1. The method of forming the energy belts on the surface of the tested object, **characterized in that** the energy belts are generated by means of a linear laser beam (2) generated optically, preferably using aspheric optics, more preferably with a cylindrical or multi cylindrical optics..

2. The method according to claim 1, **characterized in that** it is used for testing the internal structure of the object, where the tested object is scanned by recording the thermograms with forcing by deposited heat energy strips generated optically by a laser beam, then classifying of the collected thermograms , analyzing and processing them.

3. The device for shaping the energy belts on the surface of the examined object, **characterized in that** it consists of a laser (2) or lasers, an aspherical optical system which is adequate to the wavelength emitted by the laser (2), preferably based on cylindrical or multi cylindrical lenses for spatial shaping of the beam forming the laser.

4. A device for testing the internal structure of an object, **characterized in that** it consists of a camera or infrared cameras, laser module with aspheric optics preferably cylindrical or multi cylindrical, the drive unit and the synchronization of the location and angle of a laser module (servocontroller + servomotor), distance measuring sensor unit of the device to the tested object, the process control unit and the data acquisition (DAQ - data acquisition), the visualization band and the user's interface (monitor, keyboard, CPU, HMI panel Human Machine Interfaces), in which the device the beam emitted from the laser passes through the optical aspheric system , preferably of cylindrical or multi cylindrical, generating the energy bands on the surface of the examined object, moved paralelly through the drive complex and synchronization position and the account of laser module (3) in a direction perpendicular to the generated belt or belts , and the resulting thermal images are collected by the DAQ unit (5) and are then analyzed, preferably using the visualization unit and the user's interface (6).
